# EUROPEAN PATENT SPECIFICATION

(11) **EP 2 397 423 B1**
(45) Date of publication and mention of the grant of the patent: **30.12.2015**
(21) Application number: 11170234.6
(22) Date of filing: 16.06.2011
(51) Int. Cl.: B65D 88/02, B65D 88/12, B65D 90/00, B60P 1/34, B60P 1/54

(54) **Container system for bulk material**
Behältersystem für Schüttgut
Système de conteneurs pour matériau en vrac

(30) Priority: 16.06.2010 NL 2004902
(43) Date of publication of application: 21.12.2011
(73) Proprietor: Keuken Container Logistiek Aantjes, 2906 BP Capelle a.d. IJssel (NL)
(72) Inventor: Aantjes, Aart, 2906 BP Capelle aan den IJssel (NL)
(74) Representative: Algemeen Octrooi- en Merkenbureau B.V.

(56) References cited:
- DE-A1- 10 053 615
- DE-U1- 9 110 046
- DE-U1- 9 310 355
- DE-U1- 9 314 739
- FR-A1- 2 732 314
- US-A- 1 407 595

## Description

The invention relates to a container system for bulk material and other types of waste, comprising a plurality of stackable containers.

Containers for collecting bulk material, such as sand, demolition waste, earth and other waste, such as household waste (large and small), garden waste, industrial waste, construction waste, paper and cardboard etc are known per se in practice.

The dimensions of containers for bulk material vary from 3 m³ to, for example, 40 m³. The shape of these containers varies widely. For bulk material, rectangular containers having an open top side are generally used in practice, which containers have a semi-open, downwardly sloping opening on a short side for filling and emptying the container. Containers of this type are known as "skips". Skips are nestable when empty.

To facilitate their transportation, skips are on either side provided with solid, outwardly extending pins or crane hooks for lifting the container straddled between lifting arms of a so-called skip carrier. The lifting arms are disposed at the rear of the loading platform of the skip carrier. Consequently, these skips can only be loaded or unloaded from the rear of the skip carrier, which is not always possible in practice, in particular if insufficient space is available for the skip carrier.

A skip carrier can transport only one loaded skip at a time.

Statutory regulations require that open skips must be covered with a net during transport in order to prevent demolition waste or other waste falling from the container. If the "net covering" does not take place in a careful manner, there is still a risk of the waste or the like falling from the container and landing on the road or causing damage to other road users, with all the inherent risks.

In addition to open skips, also closed skips are used. In the case of a closed skip, the skip has an approximately gable roof-like cover comprising one or more folding hatches for filling and emptying the container. In some cases a separate door may be provided for emptying the container. Such closed skips are not nestable, and also in the case of closed skips a skip carrier can transport only one skip at a time.

Other types of containers are the so-called sea containers. Sea containers generally have a closed rectangular shape, measuring 20-45 ft. For road transport, these containers are bolted down on the loading platform of a special transport vehicle. Also in this case, only one container can be transported at a time on a truck or a trailer.

Roll-off containers have dimensions varying from 10m³ to 30m³, they are provided with one or two rails on the underside for sliding or rolling the container onto the loading platform of a transport vehicle over running wheels. This type of container, too, can only be loaded and unloaded from the rear side of the transport vehicle, and that only one container at a time.

Another drawback besides the limited loading and unloading possibilities of the containers described above is the fact that they are uneconomic to transport, because only one container can be transported by a truck at the same time, or two containers if a trailer is used. If several containers are to be transported, several runs are required. Also for environmental reasons this is not a very optimum transport solution.

Because of the shape of the skips, the effective loading capacity is smaller in practice than the volume which, considering the external dimensions of the container, could be available.

From German utility model DE 93 14 739 U1 and German utility model DE 93 10 355 stackable skips are known which are provided with support elements for stacking the containers in a self-centring manner by means of the support elements. US patent 1,407,595 and German patent application 100 53 615 A1 disclose stackable containers having equal dimensions.

Starting from US patent 1,407,595 an object of the invention is to provide a container system for bulk material and waste, by means of which a more economic and environmentally friendly transport can be realised and which have an optimally effective loading capacity.

The container system according to the invention comprises a plurality of stackable containers, in particular of the type that can be emptied by turning or tipping, each container comprising a bottom wall which defines a rectangular plane having four sides, four side walls that join said sides of said bottom wall substantially perpendicularly, which side walls are substantially flat and which enclose a substantially rectangular space for filling the container with said bulk material and waste, wherein two opposite side walls of each container are provided with upright support elements at their edges remote from said bottom wall, which support elements extend beyond the respective edges in a direction transversely to said bottom wall, which support elements function to assist in stacking a further container in a self-centring manner with its bottom wall, which support elements are arranged in such a manner that said edges of said opposite side walls comprising said support elements form support means for supporting the bottom wall of said further container characterised in that said bottom walls of different containers of said container system have different dimensions, wherein a first linear dimension, such as the width, of the bottom wall is the same for all containers of said container system, and wherein a second linear dimension, such as the length, of said bottom wall transversely to said first linear dimension is a whole multiple of the second linear dimension of the smallest container of said container system, wherein said support elements of each container of said container system are provided at said side walls that join said sides of said bottom wall having said second linear dimension , such that a number of containers having bottom walls of mutually different dimensions can be stacked in various ways in a contiguous relationship so as to form a block-shaped stack of containers having substantially flat outer boundary walls.

In the container system according to the invention, a stacked container is supported with its bottom wall on the edges remote from the bottom wall of two opposite side walls comprising support elements of the container beneath. By having the container designed such that self-centring stacking thereof is possible, a stack of containers having substantially flat, smooth outer boundary walls is automatically formed upon stacking, so that several containers can be transported by road at the same time by means of a single transport vehicle, so that a higher transport efficiency and a lower burden on the environment is achieved. Because of its substantially rectangular block shape with substantially flat walls, an optimum transport volume, considering the dimensions of the container, is obtained.

By supporting stacked containers on the edges of the side walls, the dimensions of the bottom walls of the containers may differ from each other, such that a number of containers having bottom walls of mutually different dimensions can be stacked in contiguous relationship so as to form a block-shaped stack of containers having substantially flat outer boundary walls.

By having a first linear dimension, such as the width, of the bottom wall the same for all containers, and in that a second linear dimension, such as the length, of the bottom wall transversely to the first linear dimension is a whole multiple of the second linear dimension of the smallest container of the container system, it is possible to stack containers in staggered relationship, i.e. in "bond fashion", so that a solid stack is obtained.

In a preferred embodiment of the invention the container system comprises stackable containers wherein the second linear dimension of a largest container equals three times the second linear dimension of the smallest container, and wherein the second linear dimension of an intermediate container equals twice the second linear dimension of the smallest container. In this way a uniform and universal container system is provided.

The support elements of the containers of the container system can be of simple and robust construction, enabling them to withstand the rough treatment and large forces to which they are subjected in practice upon loading, unloading and stacking of the containers.

To ensure a stable stacking of the containers, the invention in particular provides a support element being disposed near each end of the edge of the at least two opposite side walls of the container, which support elements are provided on the outwardly facing side, seen from a container, of the edge remote from the bottom wall. More support elements may be provided, of course, for example three on each edge of a side wall.

The use of support elements in the form of wedge-shaped elements that taper off in the direction away from the bottom wall of the container reinforces the self-centring effect when a further stackable container is received with its bottom wall between the oblique sides of opposite wedge-shaped elements so as to thus form a stack of containers having substantially flat, smooth outer boundary walls.

In another embodiment of the stackable container according to the invention, the edges of the at least two opposite side walls, which constitute the support means, are formed by a support beam that extends along a respective side wall. The support beams lie in one and the same plane facing away from the bottom wall and being substantially parallel therewith. The support beams are preferably provided on the outwardly facing sides, or the sides facing away from each other, of the respective side walls so as not to reduce the effective loading capacity of the container.

Yet another embodiment provides a stackable container comprising girders near and below the edge of a side wall, which girders extend transversely to the side wall in the direction of an opposite side wall, and an upper wall comprised of separate, rectangular panels, which panels are supported on the girders with their short sides and which are provided with connecting means for detachably connecting the panels to the girders.

Every open container can be easily closed by fitting the panels, whilst the possibility to stack the container is retained. The panels may be made of a lightweight material, such as aluminium, so that they can easily be manually fitted and removed again.

In an embodiment in order to provide a closed, substantially flat upper wall, the panels are at their long sides provided with an outwardly extending strip, which strip extends in longitudinal direction, transversely to the long sides, along some distance, so as to make it possible to arrange the panels in overlapping relationship.

In an embodiment, the girders are provided with screw holes for fixing the panels to the container, into which screw holes screws to be passed through corresponding holes in the panels can be screwed, in particular screws designed to be turned by hand.

The head of such screws is for example provided with a fold-down ring or a wing or the like.

The panels provide a more secure confinement of the bulk material or the waste in the container than is possible when using a net. Because of their dimensions, the panels provide a full closure of the upper side of a container, excluding the risk of a careless covering, as may be the case when a net is used.

In an embodiment in order to make easy loading and unloading of the container possible, a side wall of the container is configured as one or more closable doors.

In yet another embodiment, one or more of the side walls are furthermore provided with one or more closable window-or hatch-like openings or windows for loading the container. This makes it possible to use a stackable container according to the invention as, for example, a household waste container in the open air.

To make it possible to lift the containers of the container system the at least two opposite side walls of the container are provided with spaced-apart crane hooks on the sides facing away from each other. The crane hooks may be fixed to the container near the edge of the side walls or near the bottom wall of the container.

To make it possible to empty the container of the container system in a simple manner by turning or tipping, a side wall extending transversely to the at least two opposite side walls is furthermore provided with an eye-shaped hook. The tipping eye or tipping hook is preferably fixed to the container near the bottom wall thereof.

In practice the effective, internal loading capacity of the containers according to the invention is about 3, 6 and 9 m³, respectively, the first linear dimension, measured externally, being about 230 cm, the second linear dimension, measured externally, varying from about 110 cm, about 220 cm to about 330 cm, and the height being about 150 cm. Other dimensions may also be used, of course, but it has been found that, using the aforesaid volumes, the practical waste requirements can be met in by far most cases.

The advantages of the invention can be best illustrated by means of an example in comparison with a non-stackable skip, starting from a truck only and a truck and trailer of corresponding dimensions and common container capacities.

| Maximum number of containers per truck | Container capacity 3 m³ | Container capacity 6 m³ | Container capacity 9 m³ |
|---|---|---|---|
| Skip | 1 | 1 | 1 |
| Stackable container invention | 12 | 6 | 4 |

| Maximum number of containers per truck and trailer | Container capacity 3 m³ | Container capacity 6 m³ | Container capacity 9 m³ |
|---|---|---|---|
| Skip | 3 | 3 | 3 |
| Stackable container invention | 24 | 12 | 8 |

The advantages of the container system according to the invention are enormous. In this embodiment of the invention, at most 36 m³ bulk material or waste can be transported per truck, whilst this is at most 9 m³ when a non-stackable skip is used.

Since several containers can be transported at the same time, a made-to-measure waste solution can be offered in all cases by means of a combination of containers, using a single efficient transport run by road of the containers. The invention thus provides a flexible, modern and novel concept for the transportation of bulk material and waste of the kind described in the introduction.

The container system furthermore provides a means of transport or transport unit for transporting the containers as described in the foregoing, comprising a substantially flat, rectangular loading platform for placing and supporting containers thereon, with support elements provided on either side of the loading platform, which support elements extend in the direction for placing the containers on the loading platform, for placing a lowermost container of a stack of containers in a self-centring manner on the loading platform with its bottom wall by means of the support elements.

The means of transport may be embodied in any way that may be desired, such as a motorized means of transport, such as a truck, for road transport, a trailer for use in combination with a motorized means of transport, a train car and the like.

In a preferred embodiment, similar to the stackable containers, the support elements are wedge-shaped elements that taper off in the direction away from the loading platform for receiving a container in a self-centring manner between the inclined sides of opposite wedge-shaped elements with its bottom wall.

Because the stackable containers according to the invention can be stacked to form a block-shaped stack having substantially flat boundary walls, so-called stanchions may be provided on either side thereof for further stabilising the stack on the loading platform, between which stanchions the stackable containers placed on the loading platform can be retained. The stanchions may for example be configured as folding stanchions fixed to the loading platform or as detachable stanchions, for which purpose suitable receiving means are provided on the loading platform. Such stanchions are known per se in practice.

Stanchions may also be provided at the short sides of the loading platform. According to another embodiment a partition is provided on at least one short side of the loading platform, against which a stackable container can be placed. For example on the side of the cabin in the case of a motorised means of transport for road transport so as to obtain a firm retainment of the containers on the loading platform.

In particular a motorised means of transport, such as a truck, for road transport is provided, comprising a crane disposed on the loading platform at a short side thereof, which crane is provided with hoisting means for moving a stackable container onto and off the loading platform and a winch for turning or tipping the container for the purpose of emptying the same.

Using the crane, a stackable container can be placed in front of, behind and beside the truck, thus realising a versatile use, also for using containers at places where a skip carrier cannot be used because there is insufficient space for the truck, as discussed in the introduction.

In particular for use with a truck to which a trailer having a loading platform for placing stackable containers thereon can be hitched, a crane to be disposed on the loading platform at a short side remote from the driver's cabin is provided.

This makes it possible, using a crane with a lifting arm of limited dimensions, to reach and move every stackable container both on the loading platform of the truck and on the loading platform of the trailer. This is an economically very efficient solution. Placement of the crane at the rear side of the truck provides the driver or the operator of the crane with a better view of the placement and lifting of the container.

The invention will be explained in more detail hereinafter with reference to the appended drawings of preferred embodiments. In the drawings:
Figure 1 is a schematic perspective view of a prior art skip.
Figures 2-4 are schematic, elevational and perspective views of an embodiment of stackable containers of different dimensions for use in the container system according to the invention.
Figures 5-7 are schematic, elevational and perspective views of another embodiment of stackable containers of different dimensions for use in the container system according to the invention.
Figure 8 shows schematic, elevational and perspective views of an embodiment of closing panels to be used with the container shown in figures 2-7.
Figure 9 shows schematic, elevational views of a means of transport with stacked containers of the container system according to the invention.
Figures 10 and 11 are schematic, elevational views showing two stages of the emptying of the container.
Figure 12 is a schematic, larger-scale, partially elevational view of the crane and the container in the direction XII-XII as shown in figure 11.

Like elements and parts are indicated by the same numerals in the drawings and the description below.

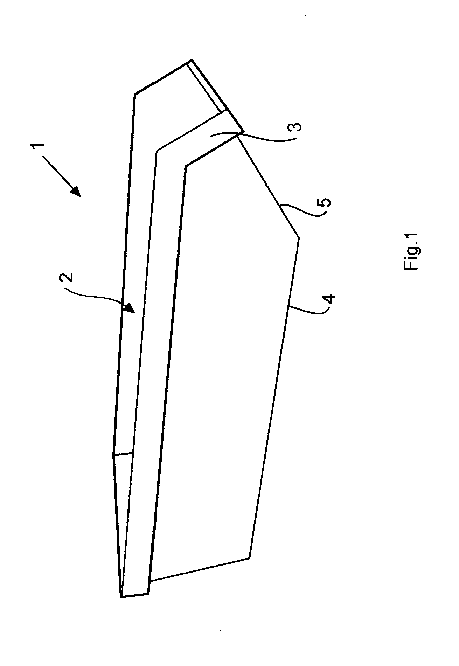

Figure 1 shows a typical example of an open skip 1 as commonly used at present for the transportation of bulk material and other types of waste. The skip has an approximately rectangular shape and an open upper side. A short end side wall 3 of the container 1 is semi-open and slopes inward 5 in the direction of the bottom 4 to facilitate filling and emptying of the container. This type of skip is nestable, i.e. in empty condition one container can be partly placed in another container.

In filled condition only one skip per skip carrier can be transported, irrespective of the dimensions or the loading capacity of the skip. These skips cannot be transported in stacked condition. Because of this, these skips are not efficient from a transportation viewpoint.

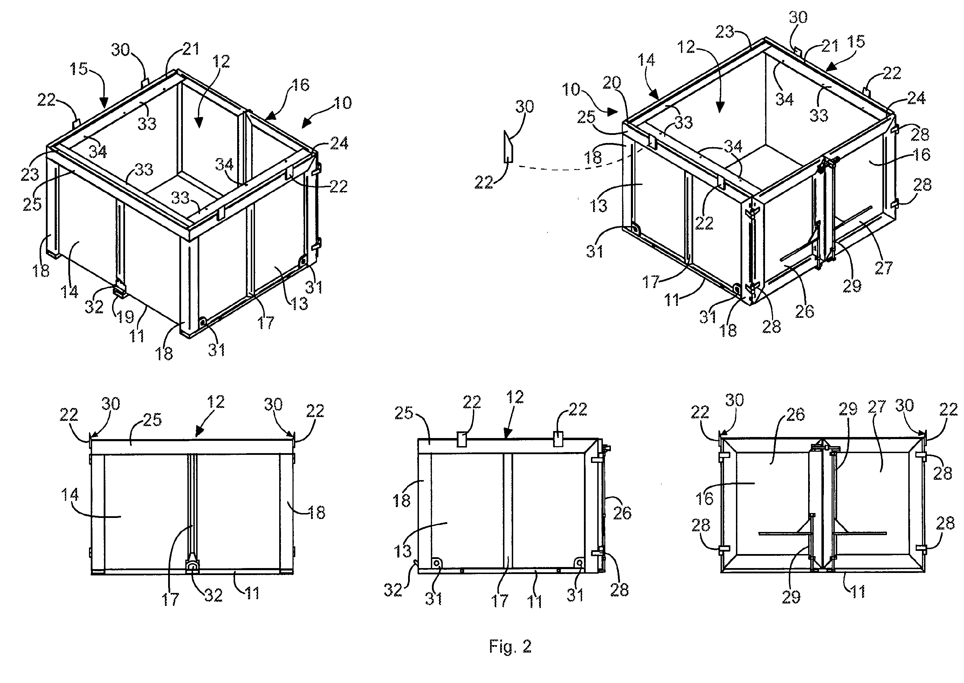

Figure 2 schematically shows in perspective view from various angles and in various views an embodiment of a stackable container 10 according to the invention for bulk material and other types of waste.

The stackable container 10 has a closed, substantially rectangular, flat bottom wall 11 and an open upper side 12. Four side walls 13, 14, 15, 16 join the bottom wall 11 at the side edges thereof, perpendicularly to the plane of the bottom wall 11. The side walls 13, 14, 15, 16 are likewise substantially flat, so that the whole of walls encloses a substantially rectangular space, for filling the container 10 with bulk material and other types of waste.

The walls 11, 13, 14, 15, 16 may be made of steel plate, with stiffening beams and/or stiffening girders and/or stiffening sections provided at the transitions where the walls join each other, right across one or more of the walls themselves, if necessary, so as to provide a container having sufficient bearing capacity. The walls may be made of a different plate material and/or of plastic material rather than of steel plate.

Two opposite side walls 13, 15 of the container 10 are provided at their edge 20, 21 remote from the bottom wall 11 with upright, spaced-apart support elements in the form of wedge-shaped elements 22 projecting beyond the edges 20, 21 in question in the direction transversely to the bottom wall 11. The wedge-shaped elements 22 are provided on the outer side of the side walls 13, 15, seen from the container 10, being spaced by such a distance and extending outward beyond the edges 20, 21 over a distance sufficiently large to make it possible to place a further container 10 with its bottom wall 11 between the wedge-shaped elements 22. The bottom wall 11 of the further container 10 is supported on the edges 20, 21 of the side walls 13, 15 and the edges 23 and 24 of the side walls 14 and 16. The edges 20, 21, 23 and 24 function as support means for the further stackable container.

In the illustrated embodiment of the stackable container 10, support beams 25 are provided on the outwardly facing sides of the side walls 13, 14, 15 along the edges 20, 21 of the at least two opposite side walls 13, 15 and the edge 23 of the side wall 14, which support beams 25 terminate in the same plane with the edges 20, 21, 23, 24, parallel to and facing away from the bottom wall 11, for supporting the further stackable container.

It will be understood that the support means and the wedge-shaped elements are of sufficiently sturdy construction as regards their size and material for supporting the stacked container and securing it against displacement, for example by making them of steel or another suitable material.

The invention is not limited to support means in the form of support beams 25. Alternatively, the support beams 25 may be placed on the inner side of the container 10, or support beams formed from a respective side wall 13, 14, 15, for example by flanging or bending or the like a respective side wall 13, 14, 15 at the end thereof remote from the bottom wall 11, may be used, so that support beams or the like forming one whole with a side wall, for example, will function as a support element.

Although the side walls 13, 14, 15, 16 may all be of closed construction, the sidewall 16 of the illustrated embodiment of the container 10 is provided with two closable doors 26, 27, which can hinge outward and which can be locked in the closed position by means of bolts 29.

The views in the bottom half of figure 2 show, from left to right, a view of the side face 14, a view of the side face 13 and a view of the side face 16 of the container 10.

As the views of the side faces 14 and 16 clearly show, the wedge-shaped elements 22 are tapered, also referred to as key-shaped, in the direction away from the bottom wall 11 of the container 10, for receiving a further stackable container 10 between the inclined or oblique sides 30 of opposite wedge-shaped elements 22. Also refer to the larger-scale detail drawing of the wedge-shaped elements 22.

The wedge-shaped elements 22 may consist of a number of spaced-apart elements, with a wedge-shaped element 22 being placed in particular near each end of the edge 20, 21 of the at least two opposite side walls 13, 15 of the container 10.

The support elements according to the invention may also consist of wedge-shaped sections or rails extending along an edge 20, 21, for example.

The at least two opposite side walls 13, 15 are provided with spaced-apart crane hooks 31 at their side remote from each other for hoisting or lifting the container 10. In the illustrated embodiment shown in figure 2, the crane hooks are disposed on the bottom wall near the corner points thereof.

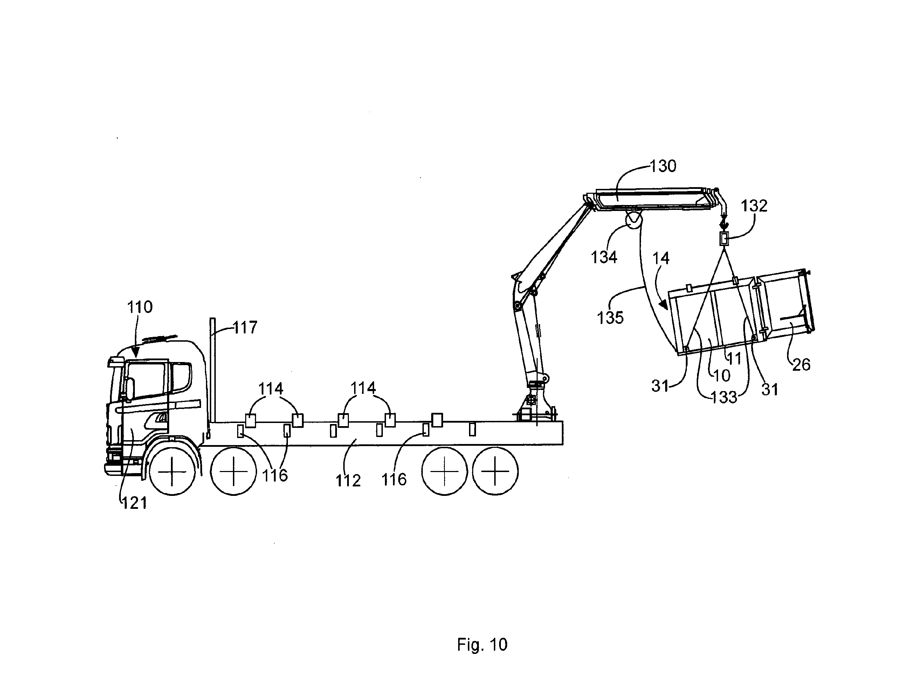

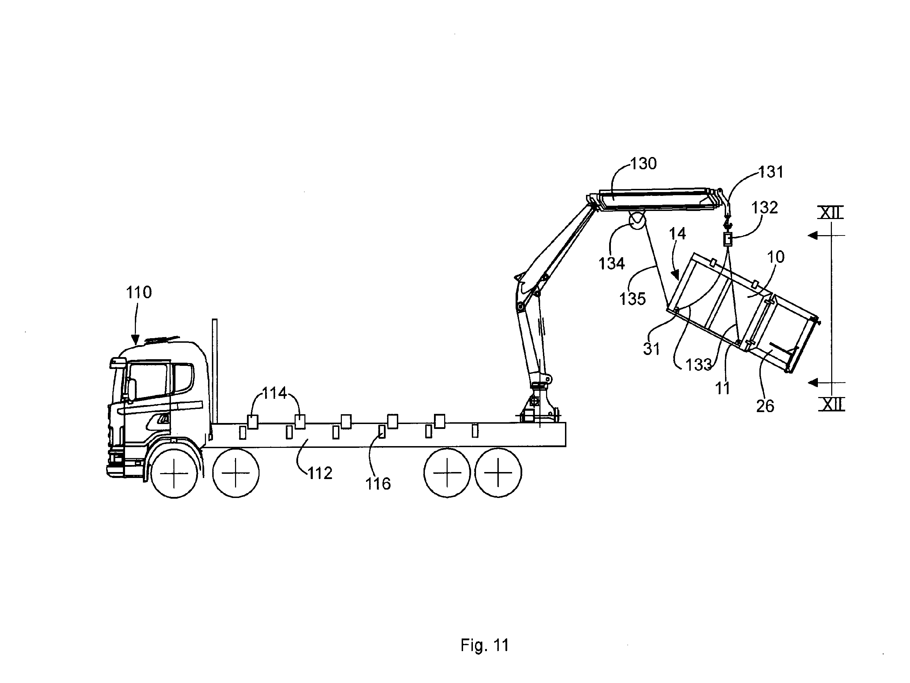

The further side wall 14 extending transversely to the at least two opposite side walls 13, 15 is provided with an eye-shaped hook 32 for turning or tipping the container 10. A winch can engage the hook or eye 32 for tipping the container 10 in the hoisted condition thereof. See figures 10 and 11.

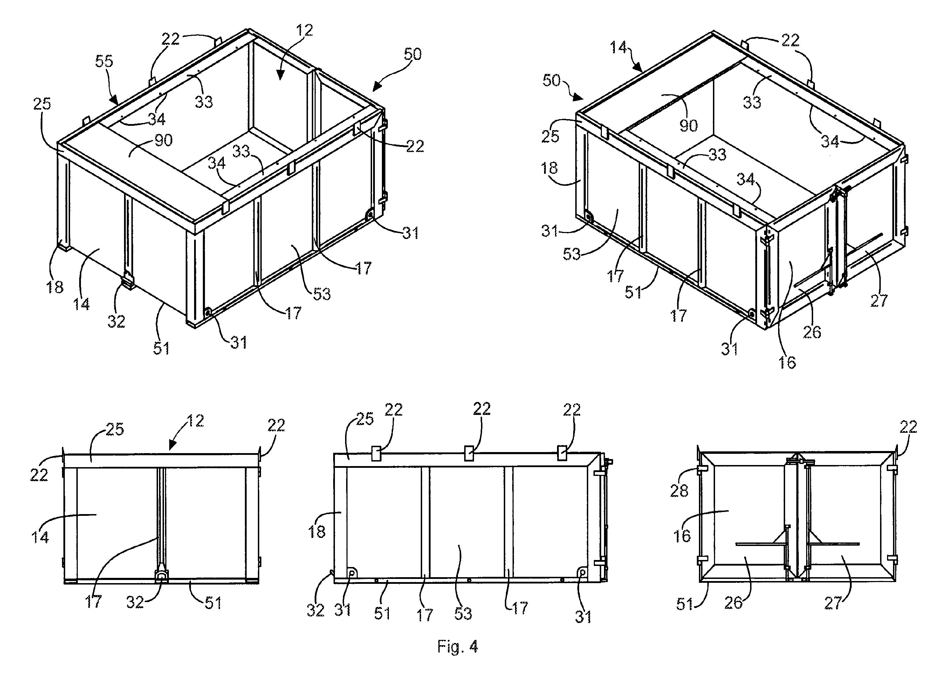

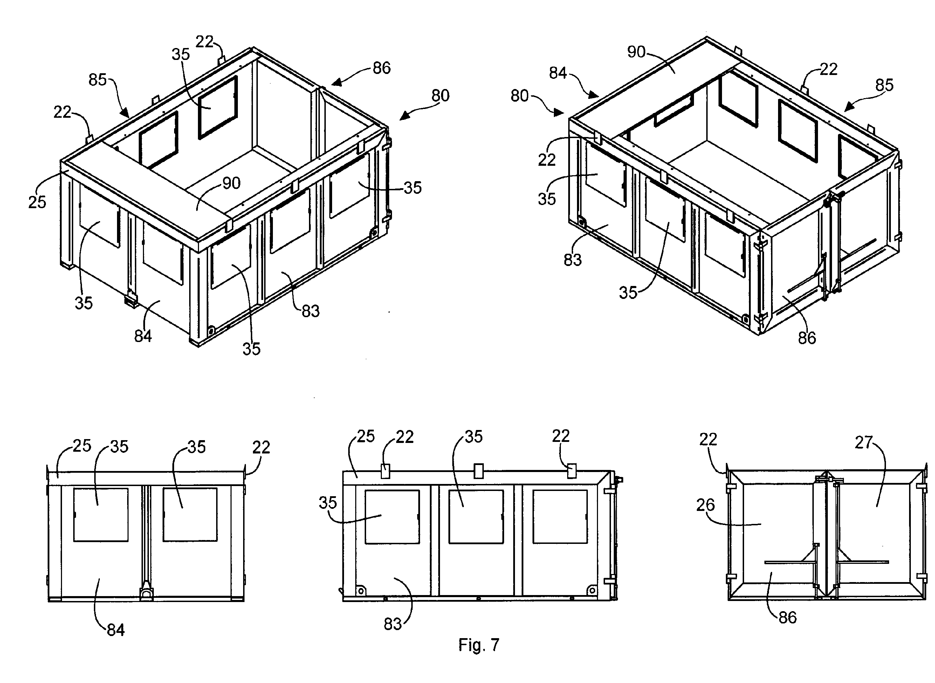

Girders 33 extending in the direction of an opposite side wall are provided transversely to a side wall 13, 14, 15, near and below the edge 20, 23, 21 thereof, for supporting separate rectangular panels 90 for closing the container 10, see figures 4, 7 and 8.

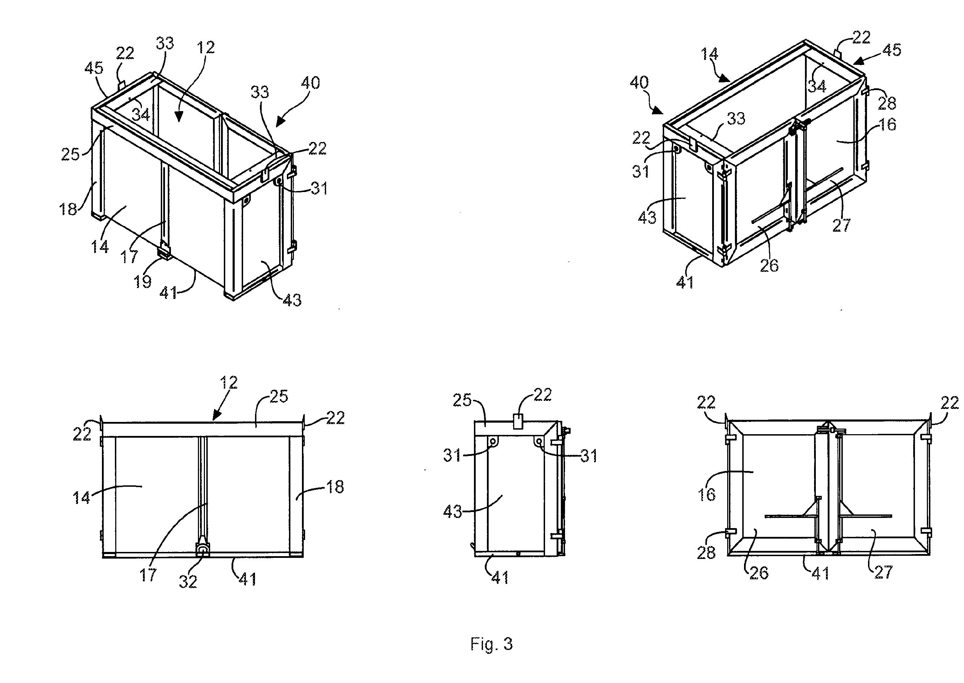

Figure 3 schematically shows in perspective view from various angles and in various views an embodiment of a stackable container 40 according to the invention for bulk material and other types of waste. The container 40 is similar to the container 10, with this exception that the dimensions of the bottom wall 41 and the side walls 43 and 45 are half those of the bottom wall 11 and the corresponding side walls 13 and 15, respectively, of the container 10 shown in figure 2.

In the illustrated embodiment of the container 40, the crane hooks 31 are disposed on the side walls 43, 45, near the corner points remote from the bottom wall 41.

The views in the bottom half of figure 3 show, from left to right, a view of the side face 14, a view of the side face 33 and a view of the side face 16 of the container 40.

Figure 4 schematically shows in perspective view from various angles and in various views an embodiment of a stackable container 50 according to the invention for bulk material and other types of waste. The container 50 is similar to the container 10, with this exception that the dimensions of the bottom wall 51 and the side walls 53 and 55 are half those of the bottom wall 11 and the corresponding side walls 13 and 15, respectively, of the container 10 shown in figure 2. In this embodiment three wedge-shaped elements 22 are provided on each of the side walls 53, 55.

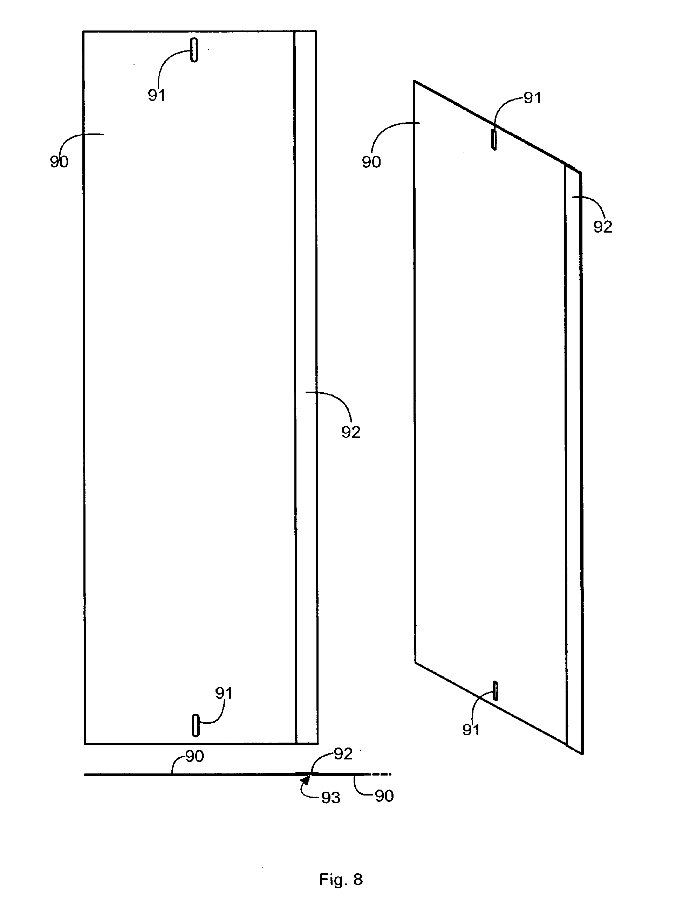

Furthermore shown is a panel 90 for closing the container 50 at the upper side. For the sake of clarity only one panel 90 is shown. It will be understood that several panels 90 can be disposed one beside another for closing the container, which panels 90 are supported on the girders 33 with their short sides and which are provided with connecting means for detachably connecting the panels 90 to the girders 33. See also figure 8.

In this embodiment the girders 33 are provided with screw holes 34, into which screw holes screws to be passed through corresponding holes 91 in the panels can be screwed, in particular screws designed to be turned by hand, which screws are known in practice.

The views in the bottom half of figure 4 show, from left to right, a view of the side face 14, a view of the side face 53 and a view of the side face 16 of the container 50.

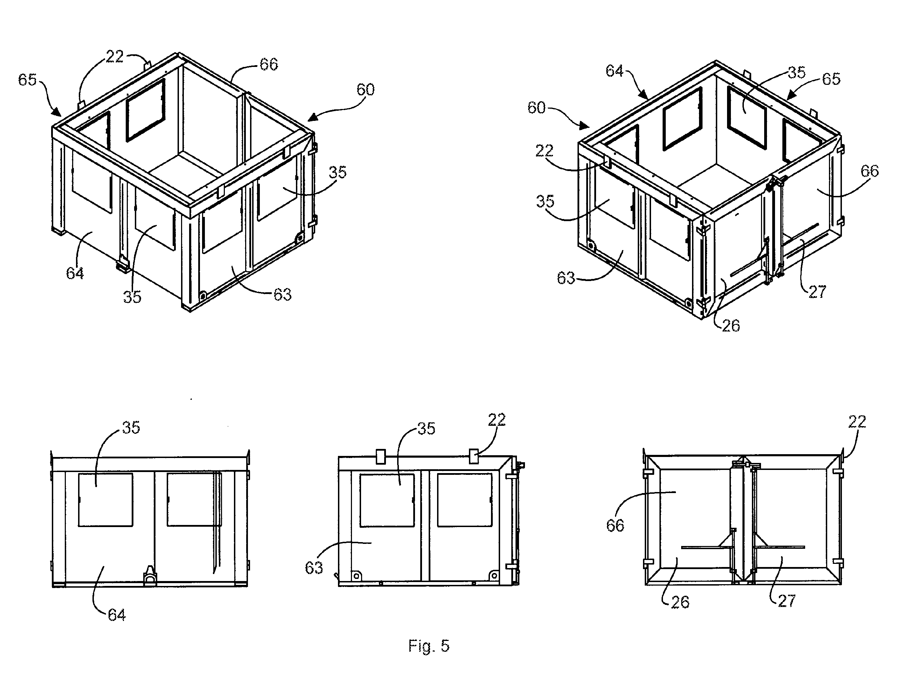

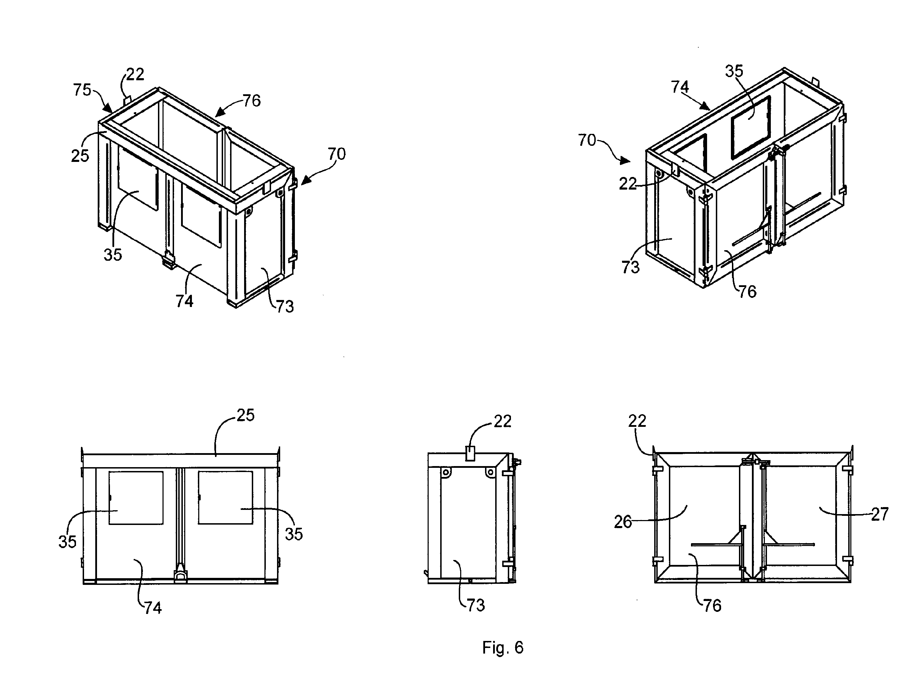

Figures 5-7 show schematic, perspective views from various angles and in various views of an embodiment of stackable containers 60, 70, 80 for bulk material and other types of waste which are built up in essentially the same manner as the containers 10, 40, 50 according to the invention. The containers 60, 70, 80 are additionally provided with one or more closable window-or hatch-shaped openings or windows 35 in one or more side walls 63, 64, 65, 66; 73, 74, 75, 67 and 83, 84, 85, 86. Via the openings, small-sized waste can be deposited in the container, which renders this type of container quite suitable for use as a waste container for collecting household waste and the like. The openings 35 can be closed, for example by means of mechanical or electronic locks, so that this type of container can be used in public spaces, for example on the street.

The views in the bottom half of figures 5, 6 and 7 show from left to right, a view of the side faces 64, 74, 84, a view of the side faces 63, 73 and 83 and a view of the side faces, 66, 76, and 86 of the containers 60, 70 and 80, respectively.

Figure 8 schematically shows in elevational and perspective view an embodiment of a panel to be used with the containers 10, 40, 50, 60, 70, 80 shown in figures 2-7. At their long sides, the panels 90 are provided with a strip 92 extending transversely thereto along some distance for arranging panels 90 in overlapping relationship, as shown at 93, so as to form a closed, substantially flat upper wall on the containers 10, 40, 50, 60, 70, 80.

By forming the panels of aluminium or of plastic material, the weight of the panels can be kept low so as to make manual placement and removal of the panels possible.

In one embodiment of the invention, the effective, internal loading capacity of the containers 10 and 60 is 6 m³, the loading capacity of the containers 40, 70 is about 3 m³, and that of the containers 50, 80 is about 9 m³. The linear dimension of the side walls 14, 44, 54, measured externally, is about 230 cm and the linear dimension of the side walls 13, 43, 53, measured externally, is about 220 cm, about 110 cm and about 330 cm, respectively; the height of all the containers is about 150 cm.

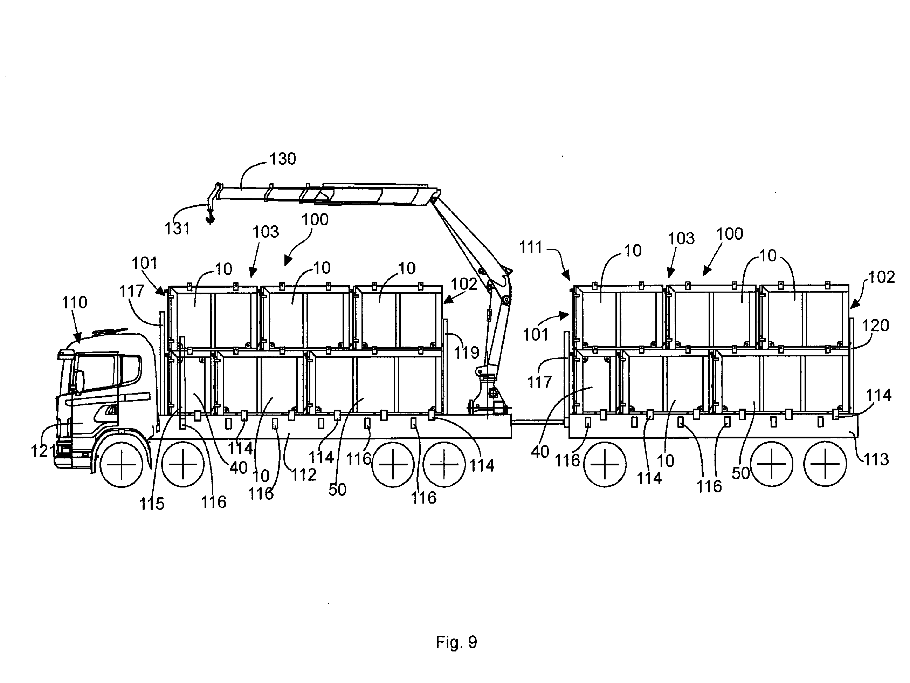

Figure 9 shows a stacked container system 100 made up of the stackable containers according to the invention, comprising a number of stacked containers 10, 40, 50, 60, 70, 80, as discussed in the foregoing.

The uniform dimensions of the containers, which are adapted to fit one another, wherein a first linear dimension of the bottom wall is the same for all containers, and a second linear dimension of the bottom wall in a direction transversely to the first linear dimension is a whole multiple of the second linear dimension of a smallest container of the container system, makes it possible to stack the containers one on top of the other, contiguous to each other, so as to form a block-shaped stack of containers having substantially flat boundary walls or boundary surfaces 101, 102, 103. It will be understood that the stack of the container system 100 shown in figure 9 can be realised in various ways, for example with two containers 50 forming the lower part of the stack and two containers 10 and two containers 40 forming the upper part of the stack, etc.

The advantages of the container system according to the invention are enormous. In the preferred embodiment of the invention shown in figure 9, which comprises stackable containers having a loading capacity of 3 m³, 6 m³ and 9 m³, respectively, at most 36 m³ bulk material or waste can be transported per truck with each run, whilst this is only at most 3 m³, 6 m³ or 9 m³ when a corresponding common skip is used.

The stack fits the loading platform of a means of transport 110, such as a motorized means of transport in the form of a truck or a trailer 111 having dimensions that are permitted by law for such trucks and/or trailers, with a substantially flat, rectangular loading platform 112, 113 for placing and supporting containers according to the invention thereon.

Similar to the stackable containers 10, 40, 50, 60, 70, 80, wedge-shaped elements 114 extending in the direction away from the loading platform are provided on either side of the loading platform for receiving a container between the plate-shaped elements with its bottom wall. In the illustrated embodiment, the wedge-shaped elements 114 are provided in spaced relationship in the longitudinal direction of the loading platform 112, 113. The wedge-shaped elements 114 secured the containers against displacement on the loading platform 112, 113.

To achieve a self-centring effect upon placement of the containers on the loading platform 112, 113, the wedge-shaped elements 114 taper off in the direction away from the loading platform for receiving a container between the inclined sides of opposite wedge-shaped elements 114. The wedge-shaped elements 114 may also be formed by wedge-shaped longitudinal sections or rails extending in the longitudinal direction of the loading platform on either side thereof.

With a view to further stabilising the stack 100 on the loading platform 112, 113, so-called stanchions 115 are provided on either side of the loading platform for retaining stackable containers placed on the loading platform 112, 113 there between. The stanchions may be configured as folding stanchions fixed to the loading platform, or as detachable stanchions 115, for which purpose suitable receiving means 116 are disposed on the loading platform 112, 113. Such stanchions are known per se in practice. In figure 1 only one stanchion 115 is shown for the sake of clarity.

Stanchions may also be provided at the short sides of the loading platform 112, 113, as is indicated by reference numeral 117. The embodiment shown in figure 9 comprises a partition 118, 119 disposed at each short side of the loading platform 112, against which the containers can be placed, so as to obtain a firm retainment of the stack of containers 100 on the loading platform 112 during road transport. The loading platform 113, too, is provided with a partition 120 at a short side.

The means of transport 110 may furthermore be provided with a crane 130 disposed on the loading platform 112 at a short side thereof, which crane is provided with hoisting means 131 for moving a stackable container onto and off the loading platform 112. The crane is disposed on the loading platform 112 at the short side remote from the driver's cabin 121. Thus, the crane 130 can reach all the containers on the loading platforms 112 and 113 whilst the length of the hoisting arm thereof can remain within bounds.

Figure 10 shows a container 10 being hoisted by means of the crane 130. Cables or chains 133 engage the crane hooks 31 on either side of the container 10 via a hoisting beam 132 for lifting the container 10 sideways or straddled there between.

In the situation shown in figure 10, the container 10 is slightly inclined to the rear, i.e. the bottom wall 11 is positioned higher near the doors 26, 27 than near the side wall 14. In this position, the doors 26, 27 can be opened, whereupon the container 10 is subsequently pulled up via a cable or chain 135 driven by a winch 134, which engages the eye-shaped hook 32, such that the container 10 tilts forward for discharging the contents of the container 10 via the open doors 26, 27, as is shown in figure 11.

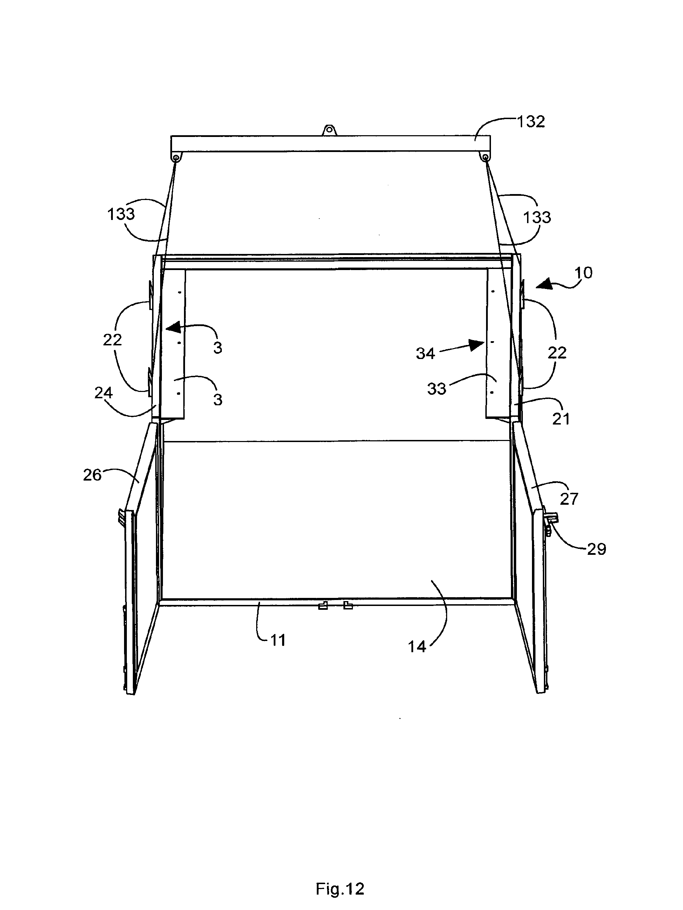

Figure 12 is a large-scale view of the hoisting beam 132 with the container 10, seen from the line XII-XII in figure 11.

Using the crane 130, the stackable containers can be moved onto or off the loading platform both from either side of the loading platform 112, 113 and from the front and the rear of the means of transport. This provides a high degree of flexibility, making it possible to place a stackable container at practically any location.

Because of the flexibility and the high degree of efficiency in the transport of the stackable container, the invention provides an entirely novel container system, by means of which any demand for waste transport and waste collection of bulk material and other similar waste can be met in an economic and environmentally responsible manner in practice while using a limited number of standardised containers.

The invention is not limited to the embodiments shown and discussed herein. A skilled person can design many different variants of the containers without departing from the scope of the invention as defined in the appended claims, in particular as regards the shape of the support elements for the self-centred stacking of containers.

## Claims

1. A container system (100) for bulk material and waste, comprising a plurality of stackable containers (10; 40; 50; 60; 70; 80), in particular of the type that can be emptied by turning or tipping, each container (10; 40; 50; 60; 70; 80) comprising a bottom wall (11; 41; 51) which defines a rectangular plane having four sides, four side walls (13, 14, 15, 16; 14, 43, 16, 45; 14, 53, 16, 55; 63, 64, 65, 66; 73, 74, 75, 76; 83, 84, 85, 86) that join said sides of said bottom wall (11; 41; 51) substantially perpendicularly, which side walls (13, 14, 15, 16; 14, 43, 16, 45; 14, 53, 16, 55; 63, 64, 65, 66; 73, 74, 75, 76; 83, 84, 85, 86) are substantially flat and which enclose a substantially rectangular space for filling the container (10; 40; 50; 60; 70; 80) with said bulk material and waste, wherein two opposite side walls (13, 15; 43, 45; 53, 55; 63, 65; 73, 75; 83, 85) of each container (10; 40; 50; 60; 70; 80) are provided with upright support elements (22) at their edges (20, 21) remote from said bottom wall (11; 41; 51), which support elements (22) extend beyond the respective edges (20, 21) in a direction transversely to said bottom wall (11; 41; 51), which support elements (22) function to assist in stacking a further container (10; 40; 50; 60; 70; 80) in a self-centring manner with its bottom wall (11; 41; 51) which support elements (22) are arranged in such a manner that said edges (20, 21) of said opposite side walls (13, 15; 43, 45; 53, 55; 63, 65; 73, 75; 83,85) comprising said support elements (22) form support means for supporting the bottom wall (11; 41; 51) of said further container (10; 40; 50; 60; 70; 80, **characterised in that** said bottom walls (11; 41; 51) of different containers of said container system (100) have different dimensions, wherein a first linear dimension, such as the width, of the bottom wall (11; 41; 51) is the same for all containers (10; 40; 50; 60; 70; 80) of said container system (100), and wherein a second linear dimension, such as the length, of said bottom wall (11; 41; 51) transversely to said first linear dimension is a whole multiple of the second linear dimension of the smallest container (40; 70) of said container system (100), wherein said support elements (22) of each container (10; 40; 50; 60; 70; 80) of said container system (100) are provided at said side walls (13, 15; 43, 45; 53, 55; 63, 65; 73, 75; 83, 85) that join said sides of said bottom wall (11; 41; 51) having said second linear dimension such that a number of containers (10; 40; 50; 60; 70; 80) having bottom walls (11; 41; 51) of mutually different dimensions can be stacked in various ways in a contiguous relationship so as to form a block-shaped stack of containers having substantially flat outer boundary walls (101, 102, 103).

2. The container system (100) according to claim 1, wherein the second linear dimension of the largest container (50; 80) of the container system (100) equals three times the second linear dimension of the smallest container (40; 70), and wherein the second linear dimension of an intermediate container (10; 60) equals twice the second linear dimension of the smallest container (40; 70).

3. The container system (100) according to one or more of the preceding claims, wherein the edges (20, 21) of said at least two opposite side walls (13, 15; 43, 45; 53, 55; 63, 65; 73, 75; 83, 85) which constitute the support means, are formed by a support beam (25) that extends along a respective side wall (13, 15; 43, 45; 53, 55; 63, 65; 73, 75; 83, 85).

4. The container system (100) according to one or more of the preceding claims, wherein an edge (24, 25) of the side walls (14, 16; 64, 66; 74, 76; 84, 86) not comprising a support element (22) remote from said bottom wall (11; 41; 51) forms a support means for supporting the bottom wall (11; 41; 51) of said further container (10; 40; 50; 60; 70; 80).

5. The container system (100) according to one or more of the preceding claims, wherein said support elements (22) are wedge-shaped elements disposed on the outwardly facing side of said edge (20, 21) remote from said bottom wall (11; 41; 51) and tapering off in a direction away from said bottom wall (11; 41; 51), for receiving said further container (10; 40; 50; 60; 70; 80) in a self-centring manner between inclined sides of opposite wedge-shaped elements (22).

6. The container system (100) according to claim 5, wherein said opposite side walls (13, 15; 43, 45; 53, 55; 63, 65; 73, 75; 83, 85) comprise a plurality of spaced apart wedge-shaped support elements (22).

7. The container system (100) according to one or more of the preceding claims, wherein a support element (22) is disposed near each end of said edge (20, 21) of said opposite side walls (13, 15; 43, 45; 53, 55; 63, 65; 73, 75; 83, 85).

## Patentansprüche

1. Behältersystem (100) für Schüttgut und Abfall, umfassend eine Mehrzahl von stapelbaren Behältern (10; 40; 50; 60; 70; 80), insbesondere des Typs, der durch Drehen oder Kippen geleert werden kann, wobei jeder Behälter (10; 40; 50; 60; 70; 80) eine Bodenwand (11; 41; 51) umfasst, die eine rechteckige Ebene mit vier Seiten definiert, vier Seitenwände (13, 14, 15, 16; 14, 43, 16, 45; 14, 53, 16, 55; 63, 64, 65, 66; 73, 74, 75, 76; 83, 84, 85, 86), die sich an die Seiten der Bodenwand (11; 41; 51) im Wesentlichen senkrecht anfügen, wobei die Seitenwände (13, 14, 15, 16; 14, 43, 16, 45; 14, 53, 16, 55; 63, 64, 65, 66; 73, 74, 75, 76; 83, 84, 85, 86) im Wesentlichen flach sind und einen im Wesentlichen rechteckigen Raum umschließen zum Füllen der Behälter (10; 40; 50; 60; 70; 80) mit dem Schüttgut und Abfall, wobei zwei gegenüberliegende Seitenwände (13, 15; 43, 45; 53, 55; 63, 65; 73, 75; 83, 85) jedes Behälters (10; 40; 50; 60; 70; 80) mit aufrechten Stützelementen (22) an ihren Kanten (20, 21), die entfernt von der Bodenwand (11; 41; 51) sind, versehen sind, wobei die Stützelemente (22) sich über die jeweiligen Kanten (20, 21) in einer Richtung quer zu der Bodenwand (11; 41; 51) erstrecken, wobei die Stützelemente (22) zum Unterstützen des Stapelns von einem weiteren Behälter (10; 40; 50; 60; 70; 80) in einer selbst-zentrierenden Weise mit seiner Bodenwand (11; 41; 51) fungieren, wobei die Stützelemente (22) derart, angeordnet sind, dass die Kanten (20, 21) der gegenüberliegenden Seitenwände (13, 15; 43, 45; 53, 55; 63, 65; 73, 75; 83, 30 85) umfassend die Stützelemente (22) Tragmittel zum Tragen der Bodenwand (11; 41; 51) des weiteren Behälters (10; 40; 50; 60; 70; 80) bilden, **dadurch gekennzeichnet, dass** die Bodenwände (11; 41; 51) unterschiedlicher Behälter des Behältersystems (100) verschiedene Abmessungen aufweisen, wobei eine erste lineare Abmessung, beispielsweise die Breite, der Bodenwand (11; 41; 51) gleich ist für alle Behälter (10; 40; 50; 60; 70; 80) des Behältersystems (100), und wobei eine zweite lineare Abmessung, wie die Länge, der Bodenwand (11; 41; 51), die quer zu der ersten linearen Abmessung verläuft, ein ganzes Vielfaches der zweiten linearen Abmessung des kleinsten Behälters (40; 70) des Behältersystems (100) ist, wobei die Stützelemente (22) jedes Behälters (10; 40; 50; 60; 70; 80) des Behältersystems (100) an den Seitenwänden (13, 15; 43,45; 53, 55; 63, 65; 73, 75; 83, 85), die sich an die Seiten der Bodenwand (11; 41; 51) umfassend die zweite lineare Abmessung anfügen, derart vorgesehen sind, dass eine Anzahl der Behälter (10; 40; 50; 60; 70; 80) umfassend Bodenwände (11; 41; 51) mit zueinander unterschiedlichen Abmessungen auf verschiedene Weise in einer zusammenhängenden Relation gestapelt werden können, um einen blockförmigen Stapel von Behältern zu bilden, die im Wesentlichen flache äußere Begrenzungswände (101, 102, 103) aufweisen.

2. Behältersystem (100) nach Anspruch 1, wobei die zweite lineare Abmessung des größten Behälters (50; 80) des Behältersystems (100) dreimal so groß wie die zweite lineare Abmessung des kleinsten Behälters (40; 70) ist, und wobei die zweite lineare Abmessung eines Zwischenbehälters (10; 60) zweimal so groß wie die zweite lineare Abmessung des kleinsten Behälters (40; 70) ist.

3. Behältersystem (100) nach einem oder mehreren der vorhergehenden Ansprüche, wobei die Kanten (20, 21) der mindestens zwei gegenüberliegenden Seitenwänden (13, 15; 43, 45; 53, 55; 63, 65; 73, 75; 83, 85), die die Stützmittel bilden, von einem Stützbalken (25) gebildet werden, der sich entlang einer jeweiligen Seitenwand (13, 15; 43, 45; 53, 55; 63, 65; 73, 75; 83, 85) erstreckt.

4. Behältersystem (100) nach einem oder mehreren der vorhergehenden Ansprüche, wobei eine Kante (24, 25) der Seitenwände (14, 16; 64, 66; 74, 76; 84, 86), die kein Trägerelement (22) umfasst entfernt von der Bodenwand (11; 41; 15 51) ein Stützmittel für die Unterstützung der Bodenwand (11; 41; 51) des weiteren Behälters (10; 40; 50; 60; 70; 80) bildet.

5. Behältersystem (100) nach einem oder mehreren der vorangehenden Ansprüche, wobei die Stützelemente (22) keilförmige Elemente auf der nach außen weisenden Seite der Kante (20, 21) entfernt von der Bodenwand (11; 41; 51) sind und sich in einer Richtung weg von der Bodenwand (11; 41; 51) verjüngen zum Aufnehmen des weiteren Behälters (10; 40; 50; 60; 70; 80) in einer selbst-zentrierenden Weise zwischen gegenüberliegenden geneigten Seiten des keilförmigen Elemente (22).

6. Behältersystem (100) nach Anspruch 5, wobei die gegenüberliegende Seitenwände (13, 15; 43, 45; 53, 55; 63, 65; 73, 75; 83, 85) eine Mehrzahl von voneinander beabstandeten keilförmigen Stützelementen (22) umfasst.

7. Behältersystem (100) nach einem oder mehreren der vorhergehenden Ansprüche, wobei ein Stützelement (22) nahe jedem Ende der Kante (20, 21) der gegenüberliegenden Seitenwände (13, 15; 43, 45; 53, 55; 63, 65; 73, 75; 83, 85) angeordnet ist.

## Revendications

1. Système de conteneurs (100) pour matériau en vrac et déchets, comprenant une pluralité de conteneurs empilables (10 ; 40 ; 50 ; 60 ; 70 ; 80), en particulier du type qui peut être vidé par retournement ou inclinaison, chaque conteneur (10 ; 40 ; 50 ; 60 ; 70 ; 80) comprenant une paroi inférieure (11 ; 41 ; 51) qui définit un plan rectangulaire ayant quatre côtés, quatre parois latérales (13, 14, 15, 16 ; 14, 43, 16, 45 ; 14, 53, 16, 55 ; 63, 64, 65, 66 ; 73, 74, 75, 76 ; 83, 84, 85, 86) qui joignent lesdits côtés de ladite paroi inférieure (11 ; 41 ; 51) de manière sensiblement perpendiculaire, lesquelles parois latérales (13, 14, 15, 16 ; 14, 43, 16, 45 ; 14, 53, 16, 55 ; 63, 64, 65, 66 ; 73, 74, 75, 76 ; 83, 84, 85, 86) sont sensiblement planes et comprennent un espace sensiblement rectangulaire pour remplir le conteneur (10 ; 40 ; 50 ; 60 ; 70 ; 80) avec ledit matériau en vrac et lesdits déchets, dans lequel deux parois latérales opposées (13, 15 ; 43, 45 ; 53, 55 ; 63, 65 ; 73, 75 ; 83, 85) de chaque conteneur (10 ; 40 ; 50 ; 60 ; 70 ; 80) sont dotées d'éléments de support verticaux (22) sur leurs bords (20, 21) à distance de ladite paroi inférieure (11 ; 41 ; 51), lesquels éléments de support (22) s'étendent au-delà des bords respectifs (20, 21) dans une direction transversale à ladite paroi inférieure (11 ; 41 ; 51), lesquels éléments de support (22) fonctionnent de manière à aider à l'empilement d'un conteneur supplémentaire (10 ; 40 ; 50 ; 60 ; 70 ; 80) de manière à le centrer automatiquement avec sa paroi inférieure (11 ; 41 ; 51), lesquels éléments de support (22) sont disposés de façon à ce que lesdits bords (20, 21) desdites parois latérales opposées (13, 15 ; 43, 45 ; 53, 55 ; 63, 65 ; 73, 75 ; 83, 85) comprenant lesdits éléments de support (22) forment des moyens de support pour supporter la paroi inférieure (11 ; 41 ; 51) dudit conteneur supplémentaire (10 ; 40 ; 50 ; 60 ; 70 ; 80), **caractérisé en ce que** lesdites parois inférieures (11 ; 41 ; 51) des différents conteneurs dudit système de conteneurs (100) ont des dimensions différentes, dans lequel une première dimension linéaire, comme la largeur, de la paroi inférieure (11 ; 41 ; 51) est identique pour tous les conteneurs (10 ; 40 ; 50 ; 60 ; 70 ; 80), dudit système de conteneurs (100), et dans lequel une seconde dimension linéaire, comme la longueur, de ladite paroi inférieure (11 ; 41 ; 51), transversalement à ladite première dimension linéaire, est un multiple entier de la seconde dimension linéaire du conteneur le plus petit (40 ; 70) dudit système de conteneurs (100), dans lequel lesdits éléments de support (22) de chaque conteneur (10 ; 40 ; 50 ; 60 ; 70 ; 80) dudit système de conteneurs (100) sont fournis sur lesdites parois latérales (13, 15 ; 43, 45 ; 53, 55 ; 63, 65 ; 73, 75 ; 83, 85) qui joignent lesdits côtés de ladite paroi inférieure (11 ; 41 ; 51), ayant ladite seconde dimension linéaire, de sorte qu'un certain nombre de conteneurs (10 ; 40 ; 50 ; 60 ; 70 ; 80) ayant des parois inférieures (11 ; 41 ; 51) de dimensions réciproquement différentes puissent être empilés de différentes façons, dans une relation contiguë, de façon à former une pile de conteneurs en forme de bloc ayant sensiblement des parois de limite extérieure planes (101, 102, 103).

2. Système de conteneurs (100) selon la revendication 1, dans lequel la seconde dimension linéaire du conteneur le plus grand (50 ; 80) du système de conteneurs (100) équivaut à trois fois la seconde dimension linéaire du conteneur le plus petit (40 ; 70), et dans lequel la seconde dimension linéaire d'un conteneur intermédiaire (10 ; 60) équivaut à deux fois la seconde dimension linéaire du conteneur le plus petit (40 ; 70).

3. Système de conteneurs (100) selon une ou plusieurs des revendications précédentes, dans lequel les bords (20, 21) desdites au moins deux parois latérales opposées (13, 15 ; 43, 45 ; 53, 55 ; 63, 65 ; 73, 75 ; 83, 85) qui constituent les moyens de support, sont formés par une poutre de support (25) qui s'étend le long d'une paroi latérale respective (13, 15 ; 43, 45 ; 53, 55 ; 63, 65 ; 73, 75 ; 83, 85).

4. Système de conteneurs (100) selon une ou plusieurs des revendications précédentes, dans lequel un bord (24,25) des parois latérales (14, 16 ; 64, 66 ; 74, 76 ; 84, 86) ne comprenant pas d'élément de support (22) à distance de ladite paroi inférieure (11 ; 41 ; 51), forme un moyen de support pour supporter la paroi inférieure (11 ; 41 ; 51), dudit conteneur supplémentaire (10 ; 40 ; 50 ; 60 ; 70 ; 80).

5. Système de conteneurs (100) selon une ou plusieurs des revendications précédentes, dans lequel lesdits éléments de support (22) sont des éléments en forme de coin disposés sur le côté orienté vers l'extérieur dudit bord (20, 21) à distance de ladite paroi inférieure (11 ; 41 ; 51) et rétrécissant dans une direction s'éloignant de ladite paroi inférieure (11 ; 41 ; 51), pour recevoir ledit conteneur supplémentaire (10 ; 40 ; 50 ; 60 ; 70 ; 80) de manière à le centrer automatiquement entre les côtés inclinés des éléments opposés en forme de coin (22).

6. Système de conteneurs (100) selon la revendication 5, dans lequel lesdites parois latérales opposées (13, 15 ; 43, 45 ; 53, 55 ; 63, 65 ; 73, 75 ; 83, 85) comprennent une pluralité d'éléments de support en forme de coin espacés (22).

7. Système de conteneurs (100) selon une ou plusieurs des revendications précédentes, dans lequel un élément de support (22) est disposé près de chaque extrémité dudit bord (20, 21) desdites parois latérales opposées (13, 15 ; 43, 45 ; 53, 55 ; 63, 65 ; 73, 75 ; 83, 85).
